# FASCICULE DE BREVET EUROPEEN

(11) **EP 2 435 302 B1**
(45) Date de publication et mention de la délivrance du brevet: **16.10.2013**
(21) Numéro de dépôt: 10723690.3
(22) Date de dépôt: 16.04.2010
(51) Int. Cl.: B64C 11/30, B64C 11/34, F01D 7/00

(54) **DISPOSITIF A VERIN FIXE POUR LA COMMANDE DE L'ORIENTATION DES PALES DE SOUFFLANTE D'UN TURBOPROPULSEUR**
VERSTELLVORRICHTUNG DER PROPELLERBLÄTTER EINES TURBOFANTRIEBWERKS MITTELS FESTEM STELLGLIED
FIXED ACTUATOR ARRANGEMENT FOR PITCH ADJUSTMENT OF A TURBOFAN ENGINE

(30) Priorité: 29.05.2009 FR 0953588
(43) Date de publication de la demande: 04.04.2012
(73) Titulaire: Snecma, 75015 Paris (FR)
(72) Inventeur: BELMONTE, Olivier, F-77930 Perthes En Gatinais (FR); BOSCO, Franck, Emmanuel, F-91700 Sainte Genevieve Des Bois (FR)
(74) Mandataire: Boura, Olivier
(86) Numéro de dépôt international: PCT/FR2010/050737
(87) Numéro de publication internationale: WO 2010/136684

(56) Documents cités:
- GB-A- 2 155 110
- GB-A- 2 182 727
- GB-A- 2 199 378
- US-A- 3 869 221
- US-A- 4 657 484

## Description

### Arrière-plan de l'invention

La présente invention se rapporte au domaine général des turbopropulseurs comportant au moins un ensemble de pales de soufflante à orientation réglable. Elle concerne plus particulièrement la commande d'orientation des pales de soufflante d'un turbopropulseur d'avion à double hélice.

De façon connue, un turbopropulseur d'avion à double hélice comprend une turbine à deux rotors contrarotatifs entraînant chacun un ensemble de pales de soufflante non carénées. On pourra par exemple se référer au document GB 2,129,502 qui décrit différents modes de réalisation d'un tel turbopropulseur. L'invention s'applique plus particulièrement aux turbopropulseurs dont les hélices sont montées à l'arrière.

Dans ce type de turbopropulseur, l'orientation des pales de soufflante de chaque ensemble (on parle également de réglage du pas) constitue l'un des paramètres permettant de gérer la poussée du turbopropulseur. A cet effet, l'une des solutions connues pour commander l'orientation des pales de soufflante d'un même ensemble est de recourir à des vérins positionnés sur des parties tournantes du turbopropulseur.

De tels dispositifs de commande sont notamment particulièrement bien adaptés pour l'ensemble de pales qui est situé le plus en arrière du turbopropulseur. En effet, la partie stator du turbopropulseur se trouve éloignée de cet ensemble de sorte qu'il est difficile d'installer des vérins qui soient solidaires d'un élément de structure fixe. On pourra se référer par exemple au document de brevet EP 1,921,325 qui décrit un dispositif dans lequel chaque pale est couplée pour le réglage de son orientation à un organe d'actionnement d'un vérin annulaire porté par le carter tournant du turbopropulseur.

La commande de l'orientation des pales de soufflante à l'aide de vérins portés par les parties tournantes du turbopropulseur présente toutefois des inconvénients. En particulier, l'alimentation en fluide hydraulique de vérins animés d'un mouvement de rotation pose en pratique d'évidents problèmes de réalisation. Par ailleurs, le comportement du fluide hydraulique soumis à une force centrifuge est peu connu et de fiabilité incertaine.

GB-A-2155 110 divulgue un dispositif de commande de l'orientation des pales de soufflante selon le préambule de la revendication 1.

### Objet et résumé de l'invention

La présente invention a donc pour but principal de pallier aux inconvénients précités en proposant une commande de l'orientation des pales de soufflante ne recourant pas à la mise en rotation de servitudes hydrauliques.

Ce but est atteint grâce à un dispositif de commande de l'orientation des pales de soufflante d'un turbopropulseur selon la revendication 1.

Le dispositif de commande selon l'invention présente l'avantage que le vérin utilisé pour déplacer le plateau est monté sur un élément de structure fixe du turbopropulseur, de sorte que le fluide hydraulique qui l'alimente ne subit pas les effets néfastes de la force centrifuge. Ce dispositif est par ailleurs fiable et simple de réalisation, il est notamment parfaitement adapté à la commande des hélices de l'ensemble arrière d'un turbopropulseur d'avion à double hélice.

Selon une disposition avantageuse, chaque bras de liaison comprend une biellette axiale dont une extrémité est fixée sur le plateau au moyen d'une liaison pivotante autour d'un axe tangentiel, et une biellette radiale dont une extrémité est fixée sur l'extrémité libre de la biellette axiale au moyen d'une liaison pivotante autour d'un axe tangentiel, l'extrémité libre de la biellette radiale étant reliée à l'anneau de synchronisation de sorte qu'un déplacement longitudinal du plateau entraîne un déplacement de la biellette radiale selon une direction sensiblement radiale. De préférence, le dispositif comprend en outre des moyens pour convertir le déplacement de la biellette radiale des bras de liaison en une rotation de l'anneau de synchronisation autour de l'axe longitudinal.

A cet effet, l'extrémité libre de la biellette radiale de chaque bras de liaison peut être montée au moyen d'une liaison de type vis sans fin dans un support de pied de pale qui est monté pivotant sur l'anneau rotatif et qui est relié à l'anneau de synchronisation par l'intermédiaire d'une bielle d'entraînement. Dans ce cas, l'extrémité libre de la biellette radiale de chaque bras de liaison comprend avantageusement une surface externe sensiblement cylindrique qui est munie de billes en saillie coopérant avec des cannelures hélicoïdales formées dans le support de pied de pale.

Alternativement, le dispositif peut comprendre une biellette tangentielle dont une extrémité est fixée sur l'extrémité libre de la biellette radiale d'un bras de liaison au moyen d'une liaison pivotante autour d'un axe longitudinal, l'extrémité libre de la biellette tangentielle étant fixée sur l'anneau de synchronisation, l'anneau de synchronisation étant relié à des supports de pied de pale qui sont montés pivotant sur l'anneau rotatif par l'intermédiaire de bielles d'entraînement.

Le dispositif peut également comprendre une biellette tangentielle dont une extrémité est fixée sur l'extrémité libre de la biellette radiale d'un bras de liaison au moyen d'une liaison pivotante autour d'un axe longitudinal, l'extrémité libre de la biellette tangentielle étant fixée sur un support de pied de pale qui est monté pivotant sur l'anneau rotatif et qui est relié à l'anneau de synchronisation par l'intermédiaire d'une bielle d'entraînement.

Le plateau peut être monté sur la tige du vérin au moyen d'un roulement de type butées à billes. Les bras de liaison peuvent être régulièrement répartis autour de l'axe longitudinal. Enfin, l'ensemble peut comprendre N pales de soufflante et le plateau être lié mécaniquement à l'anneau de synchronisation au moyen de N/2 bras de liaison.

L'invention concerne également un turbopropulseur à double hélice, comportant une turbine à deux rotors contrarotatifs et deux ensembles de pales de soufflante à orientation réglable solidaires en rotation de deux anneaux rotatifs respectivement liés aux rotors, la commande de l'orientation des pales de soufflante d'au moins l'un des ensembles étant réalisée par un dispositif de commande tel que défini précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique en coupe longitudinale d'un turbopropulseur à double hélice muni d'un dispositif de commande de l'orientation des hélices selon un mode de réalisation de l'invention ;
- la figure 2 est une vue de face du dispositif de commande de la figure 1 ;
- les figures 3A et 3B sont des vues partielles et de côté du dispositif de commande des figures 1 et 2 dans deux positions différentes;
- la figure 4 est une vue en écorché montrant un détail de réalisation du dispositif de commande des figures 1 et 2 ; et
- les figures 5 et 6 sont des vues de face de dispositifs de commande selon deux autres modes de réalisation de l'invention.

### Description détaillée de modes de réalisation

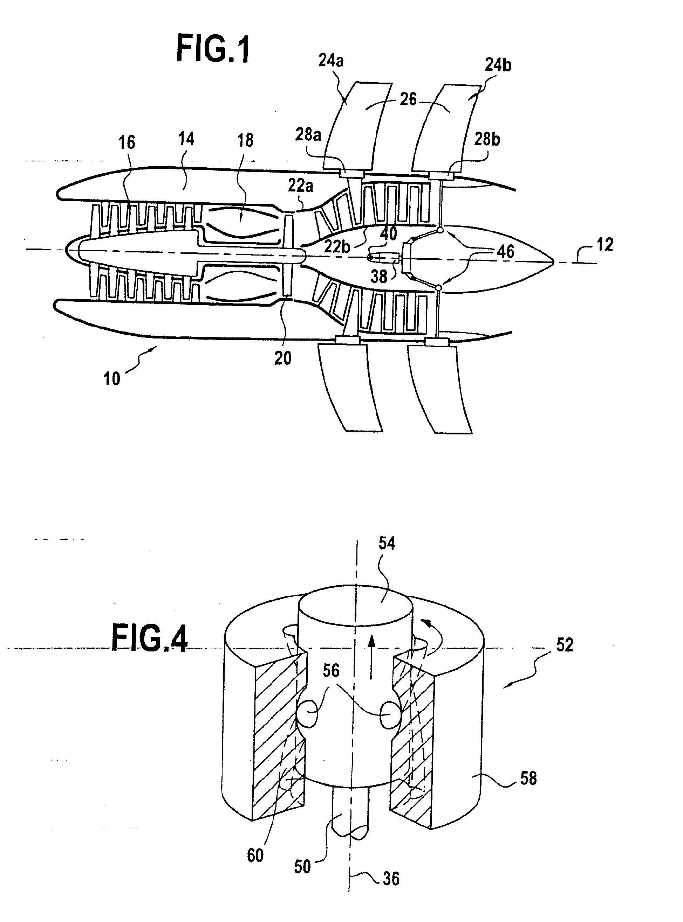

La figure 1 représente de façon très schématique un exemple de réalisation d'un turbopropulseur d'avion du type à double hélice.

Un tel turbopropulseur est connu et ne sera donc pas décrit en détails. Le turbopropulseur 10 comprend notamment un axe longitudinal 12 et une nacelle annulaire 14 disposée coaxialement autour de l'axe longitudinal. Le turbopropulseur 10 comprend en outre, d'amont en aval, un compresseur 16, une chambre de combustion 18 et une turbine 20 à deux rotors contrarotatifs 22a, 22b, ces différents éléments étant également disposés coaxialement autour de l'axe longitudinal 12 du turbopropulseur.

Le turbopropulseur 10 comprend encore un ensemble amont (ou avant) 24a et un ensemble aval (ou arrière) 24b de pales de soufflante 26 à orientation réglable. Les pales de soufflante 26 de chaque ensemble 24a, 24b sont plus précisément montées sur un anneau rotatif 28a, 28b en forme de plate-forme annulaire centrée sur l'axe longitudinal 12 du turbopropulseur.

Les pales de soufflante 26 de chaque ensemble sont par ailleurs régulièrement espacées circonférentiellement et s'étendent radialement depuis la surface de l'anneau rotatif respectif 28a, 28b. Chaque rotor 22a, 22b de la turbine 20 porte et entraîne en rotation l'un des anneaux rotatifs 28a, 28b sur lequel est monté l'un des ensembles 24a, 24b de pales de soufflante à orientation réglable.

Le turbopropulseur comprend également un dispositif pour la commande de l'orientation des pales de soufflante de chaque ensemble 24a, 24b. Le dispositif de commande selon l'invention s'applique plus particulièrement aux pales de soufflante de l'ensemble aval 24b mais il pourrait aussi bien s'appliquer aux pales de soufflante de l'ensemble amont 24a.

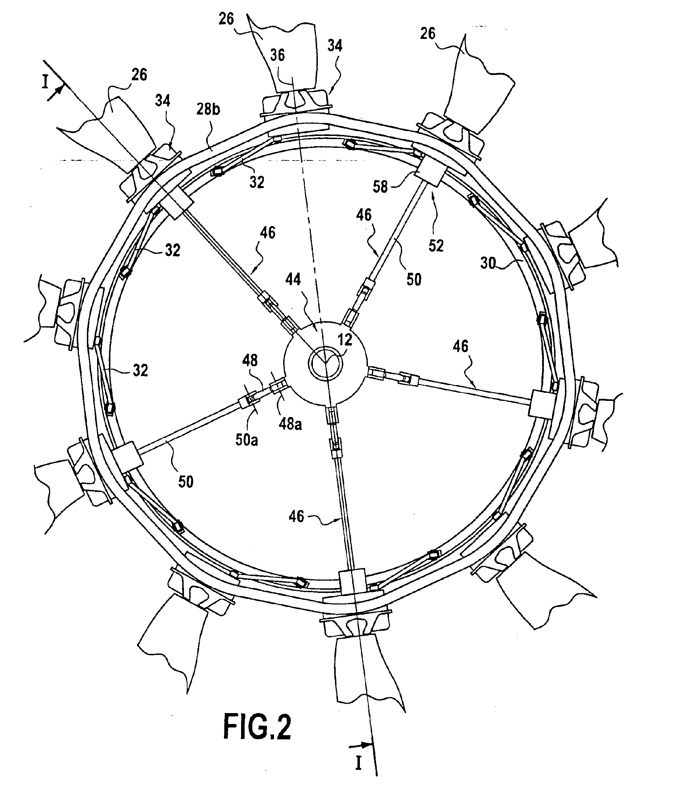

Comme représenté sur la figure 2, le dispositif de commande selon l'invention comporte notamment un anneau de synchronisation 30 qui est centré sur l'axe longitudinal 12 du turbopropulseur et qui est disposé coaxialement à l'intérieur de l'anneau rotatif 28b, celui-ci présentant communément une forme de polygone.

Cet anneau de synchronisation 30 est relié par l'intermédiaire d'une pluralité de bielles d'entraînement 32 articulés à leurs deux extrémités à des supports 34 de pied de pale qui sont montés pivotant sur l'anneau rotatif 28b. De façon connue, chaque support 34 reçoit le pied d'une pale 26, par exemple au moyen d'une attache en forme de queue d'aronde, et est fixé pivotant autour d'un axe radial 36 sur l'anneau rotatif au moyen par exemple d'un palier à roulement à billes.

De la sorte, une rotation de l'anneau de synchronisation 30 autour de l'axe longitudinal 12 du turbopropulseur (dans un sens ou dans l'autre) entraîne une rotation de chaque support 34 de pied de pale autour de leur axe radial 36 respectif (par l'intermédiaire des bielles d'entraînement 32), ce qui a pour effet de changer l'orientation des pales 26 montées sur ces supports.

Le dispositif de commande selon l'invention comporte également un vérin 38 (de type hydraulique, pneumatique ou électrique) qui est centré sur l'axe longitudinal 12 et fixé sur un élément de structure fixe 40 du turbopropulseur (par exemple un bâti lié au carter fixe permettant le passage de servitudes dans une zone isolée des éléments en rotation). Le vérin est actionné sur ordre du calculateur électronique pleine autorité (ou FADEC) du turbopropulseur.

Un plateau circulaire 44 est monté en son centre sur la tige 42 du vérin 38 au moyen d'une liaison rotative (non représentée sur les figures). Cette liaison rotative est par exemple un roulement connu de type butées à billes. Elle permet au plateau 44 de tourner autour de l'axe longitudinal 12 tandis que la tige 42 du vérin reste fixe en rotation.

Plusieurs bras de liaison 46 sont montés articulés sur le plateau 44. Dans le cas d'un ensemble comprenant N (par exemple N=10) pales de soufflante, N/2 bras de liaison 46 régulièrement répartis autour de l'axe longitudinal 12 peuvent être utilisés.

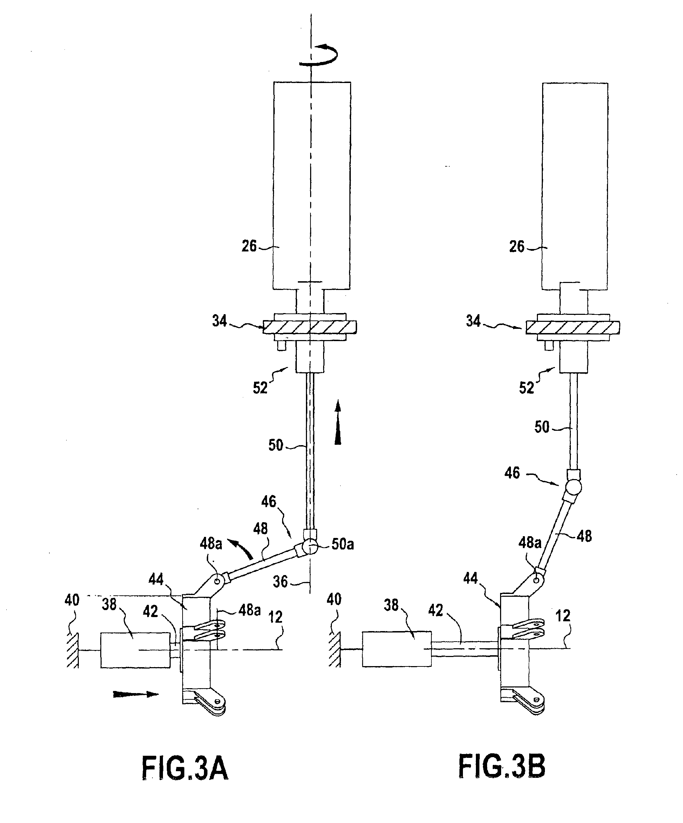

Comme représenté plus précisément sur les figures 3A et 3B, chaque bras de liaison 46 comprend une biellette 48 dite axiale dont une extrémité est fixée sur le plateau 44 au moyen d'une liaison pivotante autour d'un axe tangentiel 48a, et une biellette 50 dite radiale dont une extrémité est fixée sur l'extrémité libre de la biellette axiale 48 au moyen d'une liaison pivotante autour d'un axe tangentiel 50a. Quant à l'extrémité libre de la biellette radiale 50, elle est reliée à l'anneau de synchronisation 30 au moyen de mécanismes décrits ultérieurement.

La biellette radiale 50 étant fixe longitudinalement (car reliée à l'anneau de synchronisation), et compte tenu des liaisons pivotantes entre les biellettes 48, 50 et le plateau, on comprend aisément qu'un déplacement longitudinal du plateau 44 sous l'effet de l'actionnement du vérin 38 entraîne un déplacement de la biellette radiale selon une direction sensiblement radiale. Cette cinématique est d'ailleurs illustrée par les figures 3A et 3B.

Le dispositif de commande selon l'invention comporte encore des moyens pour convertir ce déplacement de la biellette radiale 50 des bras de liaison 46 en une rotation de l'anneau de synchronisation 30 autour de l'axe longitudinal 12.

Dans le mode de réalisation de l'invention illustré par les figures 2, 3A, 3B et 4, ces moyens sont réalisés par l'extrémité libre de la biellette radiale 50 de chaque bras de liaison 46 qui est montée au moyen d'une liaison 52 de type vis sans fin dans un support 34 de pied de pale.

De façon plus précise, l'extrémité libre de la biellette radiale 50 de chaque bras de liaison 46 comprend un embout 54 sensiblement cylindrique dont la surface externe est munie de billes 56 en saillie (figure 4). Quant au support 34 de pied de pale, il comprend une portion 58 sensiblement cylindrique à l'intérieur de laquelle est monté l'embout 54 de l'extrémité libre de la biellette radiale, cette portion présentant des cannelures hélicoïdales 60 avec lesquelles coopèrent les billes 56.

De la sorte, un déplacement radial de l'embout 54 va entraîner, par l'intermédiaire d'un déplacement des billes 56 dans les cannelures hélicoïdales 60, une rotation de la portion 58 du support 34 de pied de pale autour de son axe radial 36, et par conséquent, un changement d'orientation de la pale 26 montée sur ce support. Par ailleurs, le support 34 étant relié à l'anneau de synchronisation au moyen d'une biellette d'entraînement 32, une rotation de ce support provoque une rotation de l'anneau de synchronisation autour de l'axe longitudinal 12.

Bien entendu, d'autres exemples de réalisation d'une liaison de type vis sans fin sont envisageables. Toutefois, l'exemple de réalisation décrit ici présente l'avantage de minimiser les frottements entre l'embout 54 de la biellette radiale et la portion 58 du support de pied de pale.

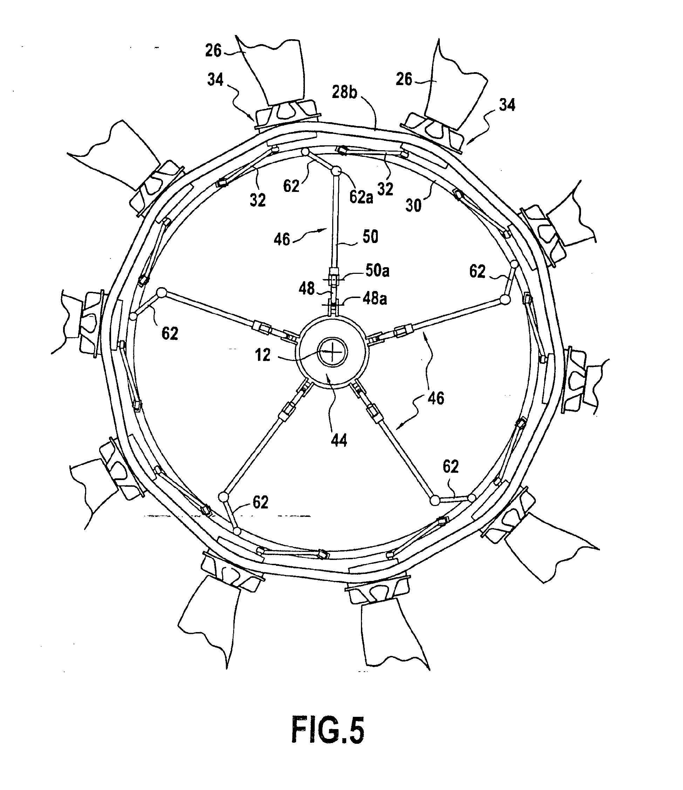

Selon un deuxième mode de réalisation de l'invention illustré par la figure 5, les moyens pour convertir le déplacement de la biellette radiale 50 des bras de liaison 46 en une rotation de l'anneau de synchronisation 30 comprennent au moins une biellette tangentielle 62 dont une extrémité est fixée sur l'extrémité libre de la biellette radiale 50 d'un bras de liaison au moyen d'une liaison pivotante autour d'un axe longitudinal 62a, l'extrémité libre de cette biellette tangentielle étant montée de façon pivotante sur l'anneau de synchronisation.

De la sorte, un déplacement radial de la biellette radiale 50 du bras de liaison 46 va provoquer une rotation de l'anneau de synchronisation 30 autour de l'axe longitudinal 12 par l'intermédiaire de la biellette tangentielle 62. Comme l'anneau de synchronisation est relié aux supports 34 de pied de pale (au moyen des biellettes d'entraînement 32), une rotation de cet anneau provoque un changement d'orientation des pales 26 montées sur ces supports.

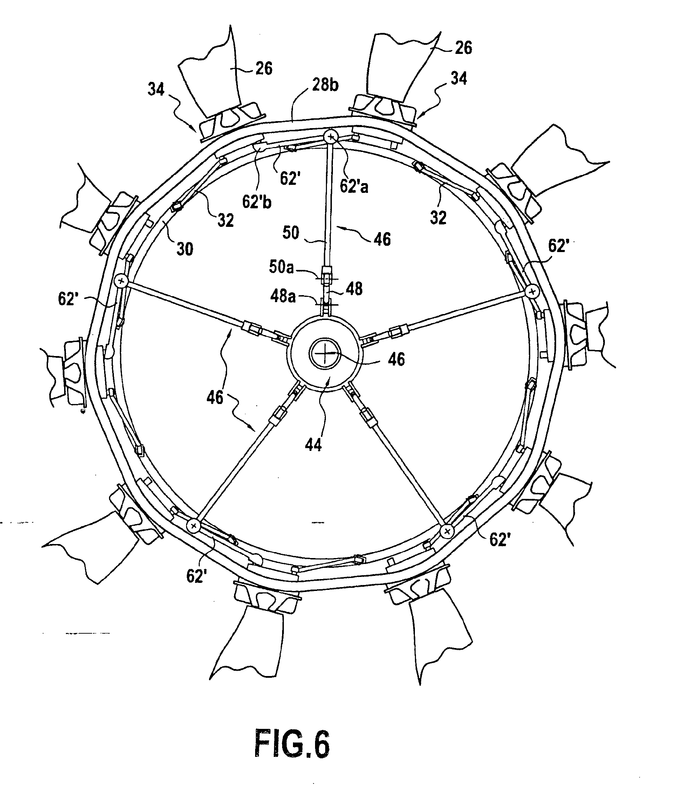

Selon un troisième mode de réalisation de l'invention illustré par la figure 6, les moyens de conversion comprennent également une biellette tangentielle 62' dont une extrémité est-fixée sur l'extrémité libre de la biellette radiale 50 d'un bras de liaison 46 au moyen d'une liaison pivotante autour d'un axe longitudinal 62'a, l'extrémité libre de cette biellette tangentielle étant cependant fixée sur un support 34 de pied de pale au moyen d'une liaison 62'b de type rotule.

Ainsi, un déplacement radial de la biellette radiale 50 du bras de liaison 46 va provoquer une rotation du support 34 de pied de pale autour de son axe radial 36, et par conséquent, un changement d'orientation de la pale 26 montée sur ce support. Par ailleurs, le support 34 étant relié à l'anneau de synchronisation au moyen d'une biellette d'entraînement 32, une rotation de ce support provoque une rotation de l'anneau de synchronisation autour de l'axe longitudinal 12.

Il est à noter que ces deux derniers modes de réalisation peuvent se combiner. La biellette tangentielle de l'un ou de plusieurs bras de liaison pouvant être reliée directement à -l'anneau de synchronisation (selon le deuxième mode de réalisation de la figure 5) tandis que celle d'un ou plusieurs autres bras de liaison pouvant être fixée sur un ou plusieurs supports de pied de pale (selon le troisième mode de réalisation de la figure 6).

Par ailleurs, les figures 2, 5 et 6 représentent un exemple de configuration de turbopropulseur dans lequel l'ensemble de pales sur lequel est positionné le dispositif de commande selon l'invention comporte dix pales de soufflante 26. Dans une telle configuration, cinq bras de liaison 46 régulièrement répartis autour de l'axe longitudinal 12 du turbopropulseur peuvent permettre d'assurer le pivotement de l'anneau de synchronisation 30 (celui-ci ayant alors une forme de décagone).

Enfin, l'invention a été décrite ci-dessus en liaison avec un turbopropulseur ayant une turbine contrarotative liée directement aux hélices. Bien entendu, l'invention s'applique également aux turbopropulseurs à double hélice dont les hélices sont entraînées par un réducteur à engrenages planétaires.

## Revendications

1. Dispositif de commande de l'orientation des pales de soufflante d'un turbopropulseur comprenant au moins un ensemble (24a, 24b) de pales (26) de soufflante à orientation réglable, ledit ensemble étant solidaire en rotation d'un anneau rotatif (28a, 28b) centré sur un axe longitudinal (12) et destiné à être lié mécaniquement à un rotor (22a, 22b) de turbine (20), chaque pale de l'ensemble étant couplée, pour le réglage de son orientation, à un anneau de synchronisation (30) centré sur l'axe longitudinal, le dispositif comprenant en outre un plateau (44) centré sur l'axe longitudinal et lié mécaniquement à l'anneau de synchronisation au moyen d'une pluralité de bras de liaison (46) montés articulés sur le plateau et reliés à l'anneau de synchronisation, **caractérisé en ce que** le plateau est monté au moyen d'une liaison rotative sur une tige (42) d'un vérin (38) destiné à être solidaire d'un élément de structure fixe (40) du turbopropulseur de telle manière qu'un déplacement longitudinal du plateau sous l'effet de l'actionnement du vérin entraîne un déplacement en rotation autour de l'axe longitudinal de l'anneau de synchronisation.

2. Dispositif selon la revendication 1, dans lequel chaque bras de liaison (46) comprend une biellette axiale (48) dont une extrémité est fixée sur le plateau au moyen d'une liaison pivotante autour d'un axe tangentiel (48a), et une biellette radiale (50) dont une extrémité est fixée sur l'extrémité libre de la biellette axiale au moyen d'une liaison pivotante autour d'un axe tangentiel (50a), l'extrémité libre de la_biellette radiale étant reliée à l'anneau de synchronisation (30) de sorte qu'un déplacement longitudinal du plateau (44) entraîne un déplacement de la biellette radiale (50) selon une direction sensiblement radiale.

3. Dispositif selon la revendication 2, comprenant en outre des moyens pour convertir le déplacement de la biellette radiale (50) des bras de liaison (46) en une rotation de l'anneau de synchronisation (30) autour de l'axe longitudinal (12).

4. Dispositif selon la revendication 3, dans lequel l'extrémité libre de la biellette radiale (50) de chaque bras de liaison (46) est montée au moyen d'une liaison (52) de type vis sans fin dans un support (34) de pied de pale qui est monté pivotant sur l'anneau rotatif et qui est relié à l'anneau de synchronisation (30) par l'intermédiaire d'une bielle d'entraînement (32).

5. Dispositif selon la revendication 4, dans lequel l'extrémité libre de la biellette radiale (50) de chaque bras de liaison (46) comprend une surface externe sensiblement cylindrique qui est munie de billes (56) en saillie coopérant avec des cannelures hélicoïdales (60) formées dans le support (34) de pied de pale.

6. Dispositif selon la revendication 3, comprenant en outre une biellette tangentielle (62) dont une extrémité est fixée sur l'extrémité libre de la biellette radiale (50) d'un bras de liaison (46) au moyen d'une liaison pivotante autour d'un axe longitudinal (62a), l'extrémité libre de la biellette tangentielle (62) étant fixée sur l'anneau de synchronisation (30), l'anneau de synchronisation étant relié à des supports (34) de pied de pale qui sont monté pivotant sur l'anneau rotatif par l'intermédiaire de bielles d'entraînement (32).

7. Dispositif selon la revendication 3, comprenant en outre une biellette tangentielle (62') dont une extrémité est fixée sur l'extrémité libre de la biellette radiale (50) d'un bras de liaison (46) au moyen d'une liaison pivotante autour d'un axe longitudinal (62'a), l'extrémité libre de la biellette tangentielle (62') étant fixée sur un support (34) de pied de pale qui est monté pivotant sur l'anneau rotatif et qui est relié à l'anneau de synchronisation (30) par l'intermédiaire d'une bielle d'entraînement (32).

8. Dispositif selon l'une quelconque des revendications 1 à 7, dans lequel le plateau (44) est monté sur la tige (42) du vérin (38) au moyen d'un roulement de type butées à billes.

9. Dispositif selon l'une quelconque des revendications 1 à 8, dans lequel les bras de liaison (46) sont régulièrement répartis autour de l'axe longitudinal (12).

10. Dispositif selon l'une quelconque des revendications 1 à 9, dans lequel l'ensemble (24a, 24b) comprend N pales (26) de soufflante et le plateau est lié mécaniquement à l'anneau de synchronisation au moyen de N/2 bras de liaison (46).

11. Turbopropulseur à double hélice, comportant une turbine (20) à deux rotors (22a, 22b) contrarotatifs et deux ensembles (24a, 24b) de pales (26) de soufflante à orientation réglable solidaires en rotation de deux anneaux rotatifs (28a, 28b) respectivement liés aux rotors, la commande de l'orientation des pales de soufflante d'au moins l'un des ensembles étant réalisée par un dispositif selon l'une quelconque des revendications 1 à 10.

## Patentansprüche

1. Vorrichtung zur Steuerung der Ausrichtung der Gebläseschaufeln eines Turboprop-Triebwerks, das wenigstens eine Anordnung (24a, 24b) von Gebläseschaufeln (26) mit einstellbarer Ausrichtung umfasst, wobei die Anordnung mit einem Drehring (28a, 28b), der um eine Längsachse (12) zentriert und dazu bestimmt ist, mit einem Rotor (22a, 22b) einer Turbine (20) mechanisch verbunden zu werden, drehfest verbunden ist, wobei jede Schaufel der Anordnung für die Einstellung ihrer Ausrichtung mit einem um die Längsachse zentrierten Synchronisierring (30) gekoppelt ist, wobei die Vorrichtung ferner eine Platte (44) umfasst, die um die Längsachse zentriert und mit dem Synchronisierring mittels einer Vielzahl von Verbindungsarmen (46), welche an der Platte gelenkig angebracht und mit dem Synchronisierring verbunden sind, mechanisch verbunden ist, **dadurch gekennzeichnet, dass** die Platte mittels einer Drehverbindung an einer Stange (42) eines Zylinders (38) angebracht ist, welcher dazu bestimmt ist, mit einem festen Strukturelement (40) des Turboprop-Triebwerks derart fest verbunden zu sein, dass eine Längsbewegung der Platte unter der Wirkung der Betätigung des Zylinders zu einer Drehbewegung des Synchronisierrings um die Längsachse führt.

2. Vorrichtung nach Anspruch 1, wobei jeder Verbindungsarm (46) eine axialen Schwingarm (48), von dem ein Ende mittels einer Schwenkverbindung um eine Tangentialachse (48a) an der Platte befestigt ist, sowie einen radialen Schwingarm (50) umfasst, von dem ein Ende mittels einer Schwenkverbindung um eine Tangentialachse (50a) an dem freien Ende des axialen Schwingarms befestigt ist, wobei das freie Ende des radialen Schwingarms mit dem Synchronisierring (30) verbunden ist, so dass eine Längsbewegung der Platte (44) zu einer Bewegung des radialen Schwingarms (50) in einer im Wesentlichen radialen Richtung führt.

3. Vorrichtung nach Anspruch 2, ferner umfassend Mittel zum Umwandeln der Bewegung des radialen Schwingarms (50) der Verbindungsarme (46) in eine Rotation des Synchronisierrings (30) um die Längsachse (12).

4. Vorrichtung nach Anspruch 3, wobei das freie Ende des radialen Schwingarms (50) eines jeden Verbindungsarms (46) mittels einer schneckenartigen Verbindung (52) in einem Schaufelfußhalter (34) angebracht ist, der an dem Drehring schwenkbar angebracht ist und der mittels einer Antriebsstange (32) mit dem Synchronisierring (30) verbunden ist.

5. Vorrichtung nach Anspruch 4, wobei das freie Ende des radialen Schwingarms (50) eines jeden Verbindungsarms (46) eine im Wesentlichen zylindrische Außenfläche aufweist, die mit vorspringenden Kugeln (56) versehen ist, welche mit in dem Schaufelfußhalter (34) ausgebildeten Spiralnuten (60) zusammenwirken.

6. Vorrichtung nach Anspruch 3, ferner umfassend einen tangentialen Schwingarm (62), von dem ein Ende mittels einer Schwenkverbindung um eine Längsachse (62a) an dem freien Ende des radialen Schwingarms (50) eines Verbindungsarms (46) befestigt ist, wobei das freie Ende des tangentialen Schwingarms (62) an dem Synchronisierring (30) befestigt ist, wobei der Synchronisierring mit Schaufelfußhaltern (34) verbunden ist, die an dem Drehring mittels Antriebsstangen (32) schwenkbar angebracht sind.

7. Vorrichtung nach Anspruch 3, ferner umfassend einen tangentialen Schwingarm (62'), von dem ein Ende mittels einer Schwenkverbindung um eine Längsachse (62'a) an dem freien Ende des radialen Schwingarms (50) eines Verbindungsarms (46) befestigt ist, wobei das freie Ende des tangentialen Schwingarms (62') an einem Schaufelfußhalter (34) befestigt ist, der an dem Drehring schwenkbar angebracht ist und der mittels einer Antriebsstange (32) mit dem Synchronisierring (30) verbunden ist.

8. Vorrichtung nach einem der Ansprüche 1 bis 7, wobei die Platte (44) mittels eines Wälzlagers vom Typ Axialkugellager an der Stange (42) des Zylinders (38) angebracht ist.

9. Vorrichtung nach einem der Ansprüche 1 bis 8, wobei die Verbindungsarme (46) gleichmäßig um die Längsachse (12) verteilt sind.

10. Vorrichtung nach einem der Ansprüche 1 bis 9, wobei die Anordnung (24a, 24b) N Gebläseschaufeln (26) umfasst und die Platte mittels N/2 Verbindungsarmen (46) mit dem Synchronisierring mechanisch verbunden ist.

11. Turboprop-Triebwerk mit Doppelpropeller, umfassend eine Turbine (20) mit zwei gegenläufigen Rotoren (22a, 22b) sowie zwei Anordnungen (24a, 24b) von Gebläseschaufeln (26) mit einstellbarer Ausrichtung, die mit zwei Drehringen (28a, 28b), welche jeweils mit den Rotoren verbunden sind, drehfest verbunden sind, wobei die Steuerung der Ausrichtung der Gebläseschaufeln von wenigstens einer der Anordnungen durch eine Vorrichtung nach einem der Ansprüche 1 bis 10 vollzogen wird.

## Claims

1. A device for controlling the pitch of fan blades of a turboprop having at least one set (24a, 24b) of variable-pitch fan blades (26), said set being constrained to rotate with a rotary ring (28a, 28b) centered on a longitudinal axis (12) and intended to be mechanically connected to a rotor (22a, 22b) of the turbine (20), each blade of the set being coupled for pitch adjustment to a synchronization ring (30) centered on the longitudinal axis, the device further comprising a turntable (44) centered on the longitudinal axis and mechanically connected to the synchronization ring by means of a plurality of connection arms (46) hinge-mounted to the turntable and connected to the synchronization ring **characterised in that** the turntable is mounted via a rotary connection to a rod (42) of an actuator (38) intended to be secured to a stationary structural element (40) of the turboprop, in such a manner that longitudinal movement of the turntable under drive from the actuator causes the synchronization ring to turn about the longitudinal axis.

2. A device according to claim 1, wherein each connection arm (46) comprises an axial link (48) having one end fastened to the turntable by means of a connection that pivots about a tangential axis (48a), and a radial link (50) having one end fastened to the free end of the axial link by means of a connection that pivots about a tangential axis (50a), the free end of the radial link being connected to the synchronization ring (30) in such a manner that longitudinal movement of the turntable (44) drives movement of the radial link (50) in a direction that is substantially radial.

3. A device according to claim 2, further including means for converting the movement of the radial link (50) of each connection arm (46) into turning of the synchronization ring (30) about the longitudinal axis (12).

4. A device according to claim 3, wherein the free end of the radial link (50) of each connection arm (46) is mounted by means of a wormscrew-type connection (52) in a blade root support (34) that is mounted to swivel on the rotary ring and that is connected to the synchronization ring (30) via a drive link (32).

5. A device according to claim 4, wherein the free end of the radial link (50) of each connection arm (46) has a substantially cylindrical outside surface that is provided with projecting balls (56) co-operating with helical fluting (60) formed in the blade root support (34).

6. A device according to claim 3, further including a tangential link (62) having one end fastened on the free end of the radial link (50) of a connection arm (46) by means of a connection that pivots about a longitudinal axis (62a), the free end of the tangential link (62) being fastened to the synchronization ring (30), the synchronization ring being connected via drive links (32) to blade root supports (34) that are mounted to swivel on the rotary ring.

7. A device according to claim 3, further comprising a tangential link (62') having one end fastened to the free end of the radial link (50) of a connection arm (46) by means of a connection that pivots about a longitudinal axis (62'a), the free end of the tangential link (62') being fastened on a blade root support (34) that is swivel-mounted on the rotary ring and that is connected to the synchronization ring (30) via a drive link (32).

8. A device according to any one of claims 1 to 7, wherein the turntable (44) is mounted on the rod (42) of the actuator (38) by means of a rolling bearing of the ball thrust bearing type.

9. A device according to any one of claims 1 to 8, wherein the connection arms (46) are regularly distributed around the longitudinal axis (12).

10. A device according to any one of claims 1 to 9, wherein the set (24a, 24b) of fan blades (26) comprises N blades and the turntable is mechanically connected to the synchronization ring by means of N/2 connection arms (46).

11. A two-propeller turboprop comprising a turbine (20) having two contrarotating rotors (22a, 22b) and two sets (24a, 24b) of variable-pitch fan blades (26) constrained to rotate with two rotary rings (28a, 28b) that are connected to respective ones of the rotors, the pitch of the blades of at least one of the sets being controlled by a device according to any one of claims 1 to 10.
